# EUROPEAN PATENT APPLICATION

(11) **EP 4 552 464 A1**
(43) Date of publication of application: **14.05.2025**
(21) Application number: 24193945.3
(22) Date of filing: 09.08.2024
(51) Int. Cl.: A01D 34/66, A01D 34/71, A01D 34/81, A01D 34/82, A01D 43/063, A01D 101/00

(54) **CUTTING PLATE AND MOBILE DEVICE PROVIDED WITH SUCH CUTTING PLATE**

(30) Priority: 09.08.2023 IT 202300017034; 09.08.2023 IT 202300017043
(71) Applicant: Stiga S.p.A., 31033 Castelfranco Veneto (TV) (IT)
(72) Inventor: PAVAN, Alberto, 36022 Cassola (VI) (IT); GRAZIOTTO, Stefano, 31050 Vedelago (TV) (IT)
(74) Representative: PGA S.p.A.

(57) **Abstract**

The present invention relates to a cutting plate (100) for a mobile device (200). The cutting plate (100) comprises a body (1) defining a cutting cavity (10) and an unloading channel (1OUT). The cutting cavity (10) comprises a first cutting chamber (11) and a second cutting chamber (12) in communication with each other with an unloading channel (1OUT). A first blade (1A) and a second blade (1B) are rotatably housed, in the first cutting chamber (11) and in the second cutting chamber (12), respectively. A deflector and/or separator element (3) is installed in the cutting cavity (10) so as to be interposed between the first cutting chamber (11) and the second cutting chamber (12). The cutting cavity (10) is externally delimited by an edge surface (20). The edge surface (20) comprises a first portion (21) and a second portion (22) defining an inlet chamber (1IN) in communication with the cutting cavity (10). Protection elements (4) extend from the second portion (22) and are configured to intercept, in use, any solid bodies expelled at high speed.

## Description

### FIELD OF THE INVENTION

The present invention relates to a cutting plate for a mobile device. In particular, the present invention relates to a cutting plate, i.e. an accessory for carrying out maintenance operations on a soil, in particular a turfgrass. The cutting plate according to the present invention is configured to be applied to a tool and/or lawnmower means, in particular in a ride-on type mower, so as to be able to carry out lawn maintenance operations, in particular grass mowing, more easily and efficiently.

The present invention also relates to a mobile device comprising the aforesaid cutting plate.

### STATE OF THE ART

The use of mobile devices, such as for example lawnmowers, having a cutting plate configured to execute a turfgrass treatment is known in the field of gardening and soil maintenance. Ride-on type mowers are particularly well known among lawnmowers, which motorised devices have a seat for the driver and controls that allow the mower to be manoeuvred in turfgrass mowing manoeuvres. Typically, ride-on lawnmowers are provided with two or more cutting tools in order to be able to optimally treat a larger area of turfgrass with each pass. In this direction, ride-on lawnmowers are particularly suitable for the treatment of large-sized turfgrass as they allow cutting times to be optimised.

Examples of ride-on lawnmowers are provided by documents JP1999-346528-A, US2009/0266043A1, US7,065,946B2 and JP-2021-136928A, which describe cutting plates for lawnmowers provided with multiple cutting means, typically blades, spaced apart from each other so as to optimize the cutting area and electrically powered by one or more motors. Generally, each cutting tool is powered by a special electric motor so that it can be set in rotation independently of the other cutting tools in the cutting plate.

Further cutting plates for mobile devices are described in documents US11,122,738B2, US2017/0339826A1, US2005/0126152A1, WO2015/055724A1, DE202020005799U1, US2022/0394918A1.

In known cutting plates, the advantages brought by the presence of multiple blades are partly mitigated by the problems of unloading the mowed material.

The Applicant has observed that the presence of multiple blades in the cutting plates known in the art poses problems of interference between the flows of grass material, which are not unloaded in a homogeneous and optimal manner on the turfgrass.

In traditional turfgrass treatment operations, in which the mowed material is expelled through an unloading channel typically located in the rear region of the cutting plate, the interference among the flows prevents a homogeneous outflow through the aforesaid unloading channel.

In the so-called mulching technique, the residues of grass material deriving from the cutting operations are not expelled through an unloading channel but remain inside the cutting cavity in which the rotating blades are housed, so as to undergo greater shredding and then be unloaded to the ground by gravity below the cutting plate. In this configuration of the cutting plate, the interference among the flows does not allow a homogeneous shredding of the grass fragments, which have mutually very different sizes depending on the blade that generated them.

The Applicant has also observed that the interference among flows generates accumulations of grass material that can hinder the rotation of the cutting tools, consequently establishing unwanted current absorption peaks on the relative motor. In particular, it is pointed out that the workload is not evenly distributed among the motors present and at least one of them is constantly subjected to a greater load than the remaining ones. In battery-powered lawnmowers, this problem has repercussions in terms of battery life, which is insufficient to treat even small-sized areas of land.

In addition, cutting plates known in the art have problems related to the expulsion of elements at high speed. Specifically, the rotary motion of the cutting tools can interfere with some elements present on the turfgrass, such as for example stones. When they come into contact with the cutting tools, said elements can be thrown at high speed outside the cutting plate and pose a danger to property and/or people in proximity of the lawnmower device. As part of the protection against the expulsion of objects at high speed, the standard provides for a test, called in jargon "ball test", adapted to determine the risk of escape of objects at high speed. The Applicant has noted that cutting plates known in the art have unsatisfactory results in terms of risk of expulsion of objects at high speed.

### OBJECT OF THE INVENTION

The object of the present invention is therefore to solve at least one of the drawbacks and/or limitations of the above technical solutions.

A first object of the present invention is to provide a cutting plate for a mobile device that guarantees an optimal treatment of the turfgrass.

A further object of the present invention is to provide a cutting plate that optimizes the flows of residual material from the cutting operations.

Another object of the present invention is to provide a cutting plate that guarantees a high quality of the mulching operations.

A further object of the present invention is to provide a cutting plate in which the material flows deriving from the cutting operations and moving within the volume of the cutting plate itself are optimized.

A further object of the present invention is that of a cutting plate that guarantees that the cutting tools are maintained in an optimal condition, in particular that minimizes the risk of absorption peaks of the motors in charge of moving the cutting tools.

Yet another object of the present invention is to provide a cutting plate that minimizes the risk of expulsion of objects at high speed and, consequently, that reduces the risk of damage to property and/or people that are in proximity of the mobile device on which the aforesaid cutting plate is mounted. A further object of the present invention is to provide a mobile device provided with the aforesaid cutting plate and thus having the advantages listed above.

These aims and other possible aims that will become more apparent during the following description are substantially achieved by a cutting plate for a mobile device and a mobile device provided with the aforesaid cutting plate according to one or more of the appended claims, as well as according to the following aspects and/or embodiments, variously combined, possibly also with the aforesaid claims.

### ASPECTS OF THE INVENTION

In one aspect, the present invention concerns a cutting plate, specifically a cutting plate configured to be associated with a mobile device. Preferably, said mobile device is a mobile device suitable for executing maintenance operations of a land, in particular grass cutting operations such as, for example, a lawnmower. Typically, the land on which said mobile device is intended to operate coincides with a turfgrass.

In one aspect, said cutting plate comprises a body, defining the main physical support of the cutting plate. In particular, said body defines a cutting cavity, which, in use, is open towards the ground.

In one aspect, said cutting cavity comprises at least one cutting chamber. In a further aspect, the cutting cavity comprises at least a first cutting chamber and a second cutting chamber in communication with each other to define said cutting cavity.

In one aspect, said cutting cavity comprises at least a first cutting chamber, a second cutting chamber and a third cutting chamber in communication with each other to define said cutting cavity.

In one aspect, said cutting plate further comprises at least one blade, rotatably housed in said at least one cutting chamber.

In one aspect, said cutting plate comprises at least a first blade and a second blade rotatably housed, respectively, in said first cutting chamber and in said second cutting chamber.

In one aspect, said cutting plate comprises at least a first blade, a second blade and a third blade rotatably housed, respectively, in said first cutting chamber, in said second cutting chamber and in said third cutting chamber.

In one aspect, said first blade, said second blade and said third blade are identical to each other in shape and/or size.

In one aspect, said body further defines an unloading channel. Said unloading channel is in communication with said at least one cutting chamber. Preferably, said unloading channel is in communication with said first cutting chamber, said second cutting chamber and said third cutting chamber.

In one aspect, said unloading channel is defined in a rear region of said body and is configured to allow an expulsion of the residues deriving from the cutting operations of said at least one blade rotatably housed in said at least one cutting chamber. Preferably, said residues are grass fragments cut by said at least one blade.

In one aspect, said cutting cavity is open towards the ground so that said at least one blade can act on the material present to execute the corresponding cutting operations.

In one aspect, said cutting chambers extend into said at least one cutting plate seamlessly and said cutting cavity is defined by the cutting chambers themselves. In other words, said cutting cavity defined by the union of the first cutting chamber, of the second cutting chamber and of any third cutting chamber, which are in continuity with each other.

In one aspect, said at least one blade is a blade configured for a treatment of a soil surface, preferably for cutting grass present on said soil surface.

In one aspect, said at least one blade comprises a metal profile having cutting edges extending in the length direction of the profile, a pair of collection flaps arranged at the ends of the profile and a pair of shredding flaps arranged adjacent to the collection flaps. In particular, said shredding flaps are bent in the reverse direction with respect to said collection flaps.

In one aspect, said at least one blade has a length comprised between 350 mm and 500 mm, preferably comprised between 400 mm and 500 mm, even more preferably equal to 435 mm.

In one aspect, said blades are equal in number to said cutting chambers. Specifically, each cutting chamber is configured to accommodate a respective blade. In accordance with this aspect, the cutting plate includes a blade for each cutting chamber.

In one aspect, said cutting chamber has a concave shape. Specifically, the concavity of said cutting chamber faces said soil so that said at least one blade can act on the surface of said soil and cut any grass present.

In one aspect, said cutting cavity is at least partially defined by at least one side wall, preferably parallel to a vertical axis, and a top wall, preferably perpendicular to said vertical axis. Said at least one side wall and said top wall are continuously connected to define at least partially said cutting cavity, which is open towards the ground to be treated. In this sense, the cutting cavity comprises an access section open towards said ground; in particular, said access section is in an opposite position with respect to said top wall.

In one aspect, said side wall at least partially defines a perimeter of said cutting cavity. In particular, said side wall is shaped so as to define at least partially said at least one cutting chamber.

In one aspect, said perimeter is an open perimeter, i.e. a perimeter that partially delimits said at least one cutting chamber.

In an alternative aspect to the previous one, said perimeter is a closed perimeter, which externally delimits and defines the cutting cavity and surrounds said at least one cutting chamber.

In one aspect, said at least one cutting chamber has a cap shape with a substantially circular section. Specifically, the side wall of the cutting cavity defines, locally for each cutting chamber, at least partially a circumference. The circumference defined by said side wall for each cutting chamber has a diameter that is greater than the length of the respective blade, preferably greater than 1-5 mm.

In one aspect, outside the perimeter of said cutting cavity, said cutting plate comprises an edge surface. Said edge surface externally surrounds said cutting cavity and defines the outer portion of the cutting plate.

In one aspect, said edge surface comprises a first portion and a second portion. Preferably, said first portion is arranged in a side (right and/or left) region of the body and said second portion is arranged in a front (or frontal) region of the body. In this document, the terms "front", "frontal", "rear", "back" and similar terms are to be considered as referring to a position along a longitudinal axis of the cutting plate. Similarly, the terms "side", "central", "right", "left" and similar terms are to be considered as referring to a position along a transverse axis of the cutting plate, where the longitudinal axis and the transverse axis are orthogonal to each other.

In one aspect, said first portion occupies both side (right and left) regions of the cutting plate and laterally delimits the second portion.

In one aspect, said first portion and said second portion of said edge surface lie, in use, on planes respectively arranged at a first height and at a second height with respect to the ground. In accordance with this aspect, said second height is greater than said first height so as to define, below said second portion of said edge surface, an inlet chamber in communication with said cutting cavity. In other words, said first portion and said second portion lie, in use, on distinct parallel planes, preferably perpendicular to said vertical axis.

In one aspect, the difference between said first height and said second height, measured along said vertical axis, is comprised between 25 mm and 28 mm

In one aspect, said edge surface comprises a third portion. Said third portion is positioned at a rear region of said body and at least partially defines said unloading channel. In particular, said third portion lies, in use, on a plane respectively arranged at a third height with respect to the ground so as to define at least partially said unloading channel, which is in communication with said cutting cavity.

In one aspect, said third height is greater than said first height, preferably greater than said second height.

In one aspect, said second portion and said third portion are substantially aligned along said longitudinal axis, while the parts of the second portion are substantially aligned along a transverse axis. In such a configuration, said first portion and said third portion are both laterally limited by said second portion.

In one aspect, said unloading channel at least partially interrupts said side wall and defines an opening in said perimeter to allow communication between the cutting cavity and an external environment and, preferably, to allow an expulsion of residues of a soil treatment due to the rotation of said at least one blade.

In one aspect, said opening defined by the unloading channel can be selectively blocked so as to allow executing, by means of said at least one blade, a grass cutting operation in mulching mode.

In one aspect, the extension, measured along said transverse axis, of the opening defined by said unloading channel at said perimeter of said cutting plate is comprised between 80% and 90% of the distance, measured along said transverse axis, between the centres of gravity of said first cutting chamber and said third cutting chamber.

In one aspect, said body of the cutting plate comprises a covering element, installed at said third portion of the edge surface. Specifically, said covering element is configured to prevent a collision between the mobile device and any solid bodies expelled at high speed from said cutting cavity due to the rotation of said at least one blade and in transit through said unloading channel.

In one aspect, said covering element is installed by means of fixing elements, such as for example screws, bolts, hinges, joints or other known fixing elements.

In one aspect, said covering element is made of metal material.

In one aspect, said cutting plate comprises a cap, not shown in the accompanying figures. Said cap is associable with said body and is configured to be removably received at said unloading channel. Preferably, said cap has substantially the same shape as said opening defined at the unloading channel and, when applied, determines a closure of said perimeter.

In one aspect, said cap is made of a metal material and/or a plastic material and/or a metal alloy.

In one aspect, said cap is configured to be installed to said body, at said unloading channel, by means of fixing elements, such as for example screws, bolts, hinges, joints or other known fixing elements. In one aspect, said cutting plate comprises at least one drive motor operatively connected to said at least one blade and configured to determine a rotation of said at least one blade.

In one aspect, said at least one drive motor is connected to said at least one blade by means of a transmission system and/or by means of a direct connection. In one embodiment, said at least one drive motor comprises a drive shaft rotatable about a substantially vertical working axis, in particular parallel to said vertical axis.

In one aspect, said at least one drive motor comprises an electric motor that can be powered via the home network through an electric cable or through a rechargeable battery which is connected for power supply to said at least one drive motor.

In an alternative aspect to the above, said at least one drive motor comprises an internal combustion engine.

In one aspect, said at least one drive motor is integral with said body. In particular, a movement along said vertical axis of said cutting plate causes a substantially identical movement of the at least one drive motor along said vertical axis.

In a preferential aspect, said cutting plate preferably comprises a drive motor for each of said blades. In one aspect, said at least one drive motor is associated with a cutting chamber, in particular at the top wall of the cutting cavity. Therefore, the top wall is interposed between, i.e. separates, a drive motor and the cutting chamber housing the relative blade.

In one aspect, said cutting plate comprises at least a first drive motor operatively connected to said first blade and a second drive motor operatively connected to said second blade, said first drive motor being distinct and separate from said second drive motor.

In one aspect, said cutting plate further comprises a third drive motor operatively connected to said third blade, said third drive motor being distinct and separate from said third drive motor.

In one aspect, each drive motor is operatively connected to a specific blade for determining a rotation thereof about a rotation axis. Preferably, each drive motor is configured to move the relative blade at a rotation speed not higher than 3300 rpm, more preferably less than 3200 rpm.

In one aspect, said at least one drive motor determines the rotation of at least one of said blades in a first direction about said rotation axis and the rotation of at least one other of said blades in a second direction about said rotation axis. In particular, said second direction is opposite to said first direction.

In other words, said at least one drive motor determines the rotation of a portion of blades in said first direction and the rotation of the remaining portion of blades in said second direction, i.e. in the opposite direction to said first direction.

In one aspect, said cutting plate comprises three cutting chambers, namely the first cutting chamber, the second cutting chamber and the third cutting chamber.

In one aspect, said second cutting chamber is interposed between the first cutting chamber and the third cutting chamber along said transverse axis, i.e. the second cutting chamber occupies a central position.

In one aspect, the first cutting chamber and the third cutting chamber are aligned along said transverse axis, i.e. the central points or centres of gravity of the first cutting chamber and of the third cutting chamber assume a substantially identical position along said longitudinal axis.

In one aspect, said second cutting chamber is not aligned with said first cutting chamber and said third cutting chamber along said transverse axis, i.e. the central point or centre of gravity of the second cutting chamber assumes a different position along said longitudinal axis with respect to the centre points or centre of gravity of the first cutting chamber and of the third cutting chamber.

In one aspect, a drive motor is configured to determine the rotation of the first blade in said first direction and the remaining drive motors are configured to determine the rotation of the second blade and of the third blade in said second direction.

In one aspect, the cutting plate comprises at least one deflector and/or separator element. Said at least one deflector and/or separator element is fixed to said body or integrated in said body.

In one aspect, said at least one deflector and/or separator element is at least partially installed in said cutting cavity so as to be interposed between said first cutting chamber and said second cutting chamber.

In one aspect, at least one deflector and/or separator element is configured to prevent, in whole or in part, a first air flow generated, in use, in said first cutting chamber, in particular by means of the rotation of the first blade, from accessing said second cutting chamber and to prevent, in whole or in part, a second air flow generated, in use, in said second cutting chamber, in particular by means of the rotation of the second blade, from accessing said first cutting chamber.

In one aspect, said at least one deflector and/or separator element is configured to interrupt the continuity between said first cutting chamber and said second cutting chamber, actually interrupting the continuity therebetween. Consequently, said at least one deflector and/or separator element is configured to divide said cutting cavity into two sub-cavities, each defined laterally by the deflector and/or separator element and by the side wall. The union of said sub-chambers coincides with said cutting cavity.

In one aspect, at least one deflector and/or separator element is configured to carry out at least one function between:
- conveying said first air flow and said second air flow towards said unloading channel;
- improving an unloading of said residues through said unloading channel in particular in the direction of a collection bag associated with said mobile device;
- improving a cutting efficiency of said first blade and/or said second blade;
- minimizing the risk of expulsion of solid bodies at high speed from said cutting cavity due to the rotation of said first blade and/or said second blade;

In one aspect, said deflector and/or separator element is made of metal material and/or metal alloy and/or plastic material.

In one aspect, said deflector and/or separator element has a thickness comprised between 0.5 mm and 10 mm, preferably between 1 mm and 5 mm, more preferably substantially equal to 3 mm.

In one aspect, said deflector and/or separator element is connected to said body by means of fixing elements, such as for example screws, bolts, hinges, joints or other known fixing elements.

In one aspect, said at least one deflector and/or separator element comprises a dividing portion, positioned at said cutting cavity, and a protection portion, positioned at said edge portion.

In one aspect, said protection portion is positioned at said second portion.

In one aspect, said dividing portion is configured to separate said first cutting chamber and said second cutting chamber so as to prevent or attenuate an interference between said first air flow and said second air flow.

In one aspect, the protection portion is configured to intercept, in use, any solid bodies expelled at high speed from said cutting chamber due to the rotation of said at least one first blade and a second blade. In one aspect, said dividing portion has a substantially flat shape and said protection portion has a substantially curved shape adapted to increase the structural strength of the deflector and/or separator element.

In one aspect, said deflector and/or separator element is interposed between the first cutting chamber, housing the first blade rotating in said first direction, and the second cutting chamber, housing the second blade rotating in said second direction.

In a preferential aspect, said deflector and/or separator element is interposed between two cutting chambers housing blades rotating in opposite direction. Therefore, said deflector and/or separator element is configured to separate, at least partially, the flows of residues of a soil treatment generated by two blades housed in two contiguous cutting chambers and rotating in opposite directions.

In one aspect, said cutting plate comprises two or more deflector and/or separator elements. In particular, the cutting plate may comprise a further deflector and/or separator element, interposed between said second cutting chamber and said third cutting chamber.

In one aspect, said further deflector and/or separator element is configured to prevent, in whole or in part, said second air flow generated, in use, in said second cutting chamber, in particular by means of the rotation of said second blade, from accessing said third cutting chamber and to prevent, in whole or in part, a third air flow generated, in use, in said third cutting chamber, in particular by means of a rotation of said third blade, from accessing said second cutting chamber.

In one aspect, said further deflector and/or separator element is configured to convey said second air flow and said third air flow towards said unloading channel.

In one aspect, said body defines a centre plane, said centre plane extending in particular along said longitudinal axis and along said vertical axis. Specifically, said centre plane divides said body into a first half-body and a second half-body, said first half-body being able to be a right half-body and said second half-body being able to be a left half-body.

In one aspect, said deflector and/or separator element is applied to said first half-body and said further deflector and/or separator element is applied to said second half-body.

In one aspect, said at least one cutting plate comprises at least a plurality of protection elements.

In one aspect, said plurality of protection elements is fixed to said body or integrated in said body and comprises protection elements which are distinct from each other and optionally parallel to each other. Specifically, said protection elements extend from said second portion of said edge surface.

In one aspect, said protection elements extend orthogonally to said second portion, i.e. parallel to said vertical axis.

In an alternative aspect, said protection elements extend from said second portion forming an angle other than 90° with said vertical axis. Said angle is preferably comprised between 15° and 80°, more preferably comprised between 30° and 60°. By way of example, said angle may be equal to 45°.

In one aspect, said plurality of protection elements has respective apexes arranged, in use, at a distance with respect to the ground which is less than said second height, preferably at a distance substantially corresponding to said first height.

In one aspect, said protection elements are configured to intercept, in use, any solid bodies expelled at high speed from at least one of said cutting chambers due to the rotation of said at least one blade. In this way, the plurality of protection elements prevents said solid bodies from escaping from said inlet chamber. In other words, the plurality of protection elements prevents the expulsion of solid bodies thrown at high speed by the rotation of the blades towards said inlet chamber, i.e. before the cutting plate, with a direction substantially parallel to the ground.

In one aspect, said protection elements define therebetween a plurality of channels for the passage of grass present on a surface of said ground through said inlet chamber.

In one aspect, said plurality of protection elements is made of at least one of the following materials: plastic material, metal material, metallic alloy.

In one aspect, said plurality of protection elements is connected to the body of said cutting plate by means of fixing elements, such as, for example, screws, bolts, hinges, joints or other known fixing elements.

In one aspect, said at least one deflector and/or separator element is applied to said first half-body and the protection elements of said plurality of protection elements are applied to said second half-body.

In one aspect, said plurality of protection elements 4 comprises a number of protection elements comprised between 3 and 50, preferably comprised between 5 and 20, more preferably comprised between 7 and 13.

In one aspect, said protection elements are substantially equidistant, in particular they are spatially spaced at a substantially equal distance. In other words, considering a first protection element, a second protection element and a third protection element consecutive to each other, the distance placed separating between the first protection element and the second protection element is substantially equal to the distance placed separating between the second protection element and the third protection element.

In an alternative aspect, said protection elements are spatially spaced at different distances. By way of example, at least one protection element of said plurality of protection elements that has distances different from the adjacent protection elements.

In one aspect, the protection elements of said plurality of protection elements are substantially aligned with each other. In other words, there is a common plane intersecting all the protection elements of said plurality of protection elements.

In one aspect, said common plane forms with said transverse axis an angle comprised between 10° and 60°, preferably comprised between 15° and 45°, more preferably comprised between 20° and 40°, even more preferably comprised between 30° and 35°.

In one aspect, the protection elements of said plurality of protection elements extend in said common plane over a length comprised between 250 mm and 400 mm, preferably comprised between 300 mm and 350 mm, even more preferably equal to 320 mm.

In one aspect, said cutting plate preferably comprises a base connecting said protection elements of said plurality of protection elements to each other.

In one aspect, said base is applied, in particular screwed, to said edge surface, preferably at said second portion of the edge surface. Therefore, said base is configured to connect said plurality of protection elements to the body of the cutting plate.

In one aspect, said plurality of protection elements and said base are made in a single piece. Preferably, said base and the protection elements of said plurality of protection elements form a single body made of plastic material.

In one aspect, said base has a substantially planar extension and the protection elements of said plurality of protection elements extend away with respect to said base up to said apex, preferably in a direction perpendicular to said base.

In one aspect, the extension of said base is comprised between 160 mm and 480 mm, preferably comprised between 280 mm and 360 mm, more preferably of about 320 mm.

In one aspect, each protection element has a symmetrical geometry with respect to a plane of symmetry substantially parallel to said vertical axis.

In one aspect, each protection element has a substantially linear shape and, consequently, said plurality of protection elements constitutes a linear comb.

In an alternative aspect, said plurality of protection elements may have articulated shapes, comprising one or more angled and/or curved segments. By way of example, said protection elements may assume the form of lightning bolts, with a plurality of segments angled between them in succession. In one aspect, said apex is shaped in accordance with one of the following forms:
- a substantially round shape (embodiment illustrated);
- a substantially flat shape;
- a substantially pointed shape;
- a substantially square shape.

In one aspect, each protection element comprises a pair of side walls extending between said base and said apex. In other words, said pair of side walls join said apex to said base.

In one aspect, a distance between the side walls is substantially constant along their extension between said base and said apex, i.e. the side walls are substantially parallel to each other.

In an alternative aspect to the above, the distance between the side walls is decreasing along their extension from said base to said apex. In accordance with this aspect, said distance assumes a maximum value in proximity of said base.

In an alternative aspect to the previous two, the distance between the side walls is increasing along their extension from said base to said apex. In accordance with this aspect, said distance assumes maximum value in proximity of said apex.

In one aspect, at least one protection element of said plurality of protection elements comprises a through hole, which extends in the respective protection element along an extension direction, which, in use, is preferably parallel to said vertical axis and therefore preferably perpendicular to said base. In one aspect, said through hole is substantially symmetrical to said extension direction.

In one aspect, said through hole is configured to receive a fixing element configured to stably connect said protection element to said body of the cutting plate.

In one aspect, said fixing element comprises a screw.

In one aspect, said through hole comprises at least a first section and a second section, said first section being closer to said base with respect to said second section. Preferably, said first section has a diameter smaller than a diameter of said second section.

In an alternative aspect, said through hole has a substantially constant diameter in said extension direction.

In one aspect, said through hole has a substantially smooth inner wall.

In an alternative aspect, said through hole has a threading on at least a part of the respective inner wall, said threading being configured to engage said fixing element, which also has a threaded portion adapted to cooperate with said threading.

In one aspect, said plurality of protection elements comprises two end protection elements and at least one central protection element. In particular, said end protection elements define therebetween a space comprising said at least one central protection element.

In one aspect, said end protection elements may have the same shape as the at least one central protection element or they may have a different shape with respect to said at least one central protection element.

In one aspect, said end protection elements have said through hole.

In one aspect, at least one central protection element has said through hole.

In one aspect, said plurality of protection elements is positioned in said second region of the edge surface at least before said second cutting chamber and said third cutting chamber, i.e. the cutting chambers between which the deflector and/or separator element is not present and which house the blades rotating in the same direction (second direction).

In one aspect, one or more constructive parameters of said plurality of protection elements, such as for example the number of the protection elements and/or the extension of each of the protection elements in a direction parallel to said transverse axis and/or the inclination of each of the protection elements with respect to said transverse axis and/or the shape of the section obtained by intersecting each of the protection elements with a plane substantially parallel to the ground, are defined so as to allow the protection elements of said plurality of protection elements to act, as a whole, as a continuous shield for any solid bodies expelled from said at least one cutting chamber in the direction of said inlet chamber.

In one aspect, said cutting plate comprises a further plurality of protection elements, said plurality of protection elements and said further plurality of protection elements being positioned in said second region respectively before said second cutting chamber and said third cutting chamber and before said second cutting chamber and said third cutting chamber.

In one aspect, said cutting plate comprises a further base connecting the protection elements of said further plurality of protection elements to each other, said further base being distinct and separate from the base connecting the protection elements of said plurality of protection elements to each other.

In a further aspect, the present document also relates to a mobile device. In particular, the present invention relates to a mobile device configured to execute maintenance operations within a work area. In one aspect, said mobile device comprises at least:
- a support frame;
- the cutting plate according to at least one of the preceding aspects, preferably movably associated with said support frame by means of a system for varying the height of said cutting plate with respect to the ground;
- a movement arrangement of the mobile device configured to implement an advancement of said mobile device on said ground;
- control means operatively connected to said cutting plate and/or said movement arrangement in order to allow a user of said mobile device to actuate at least one among an activation, an adjustment and a deactivation of said cutting plate and/or said movement arrangement.

In one aspect, said movement arrangement comprises a plurality of wheels of which at least one wheel is a drive wheel and/or one or more tracks.

In one aspect, said control means comprise at least one among a button, a pedal, a lever, a joystick and a screen, preferably a touchscreen.

In one aspect, said mobile device is electrically powered and comprises a plurality of on-board batteries. Preferably, said batteries are of the rechargeable and removable type.

In one aspect, said mobile device further comprises a collection bag configured to allow an accumulation, for the purpose of subsequent disposal, of said residues, in particular of cut grass fragments. In particular, said collection bag is in communication with said unloading channel of said cutting plate and/or with the opening defined by said unloading channel at said perimeter of said cutting plate.

Further features and advantages will become more apparent from the detailed description of a preferred, but not exclusive, embodiment of a cutting plate and a mobile device, in accordance with the present invention.

### BRIEF DESCRIPTION OF THE DRAWINGS

Some embodiments of the invention will be described below with reference to the accompanying drawings, provided for indicative and therefore non-limiting purposes only, in which:
- figure 1 is a perspective view of a mobile device, in particular of the ride-on lawnmower type, provided with the cutting plate in accordance with the present invention;
- figure 2 is a bottom perspective view of an embodiment of the cutting plate in accordance with the present invention;
- figure 3 is a top perspective view of the cutting plate of figure 2;
- figure 4 is a bottom plan view of the cutting plate of figure 2;
- figure 5 is a perspective view of an embodiment of a protection element, also subject-matter of the present invention, associable with the cutting plate of figures 2-4;
- figure 6 is a different perspective view of the protection element of figure 5;
- figures 7 and 8 are two different plan views of the protection element depicted in figure 6.

### DETAILED DESCRIPTION

It should be noted that in the present detailed description corresponding parts illustrated in the various figures are indicated with the same reference numerals. The figures may illustrate the subject of the invention through representations that are not in scale; therefore, parts and components illustrated in the figures related to the subject of the invention may exclusively regard schematic representations. With reference to the accompanying figures, a cutting plate has been indicated with the numerical reference "100". As will become more evident hereinafter, the cutting plate 100 in accordance with the present description is a cutting plate configured to be associated with a mobile device 200. Preferably, said mobile device 200 is a mobile device suitable for executing maintenance operations of a land, in particular grass cutting operations such as, for example, a lawnmower. Typically, the land on which said mobile device 200 is intended to operate coincides with a turfgrass.

In accordance with the present disclosure, the cutting plate 100 comprises a body 1, defining the main physical support of the cutting plate 100. As shown in the accompanying figures, said body 1 defines a cutting cavity 10, which, in use, is open towards the ground.

In particular, the cutting cavity 10 comprises at least one cutting chamber 11, 12, 13. Preferably, the cutting cavity 10 comprises at least a first cutting chamber 11 and a second cutting chamber 12 in communication with each other to define said cutting cavity 10. More preferably, the cutting cavity 10 comprises at least a first cutting chamber 11, a second cutting chamber 12 and a third cutting chamber 13 in communication with each other to define said cutting cavity 10.

The cutting plate 100 further comprises at least one blade 1A, 1B, 1C, rotatably housed in said at least one cutting chamber 11, 12, 13. Preferably, the cutting plate 100 comprises at least a first blade 1A and a second blade 1B rotatably housed, respectively, in said first cutting chamber 11 and in said second cutting chamber 12. More preferably, the cutting plate 100 comprises at least a first blade 1A, a second blade 1B and a third blade 1C rotatably housed, respectively, in said first cutting chamber 11, in said second cutting chamber 12 and in said third cutting chamber 13.

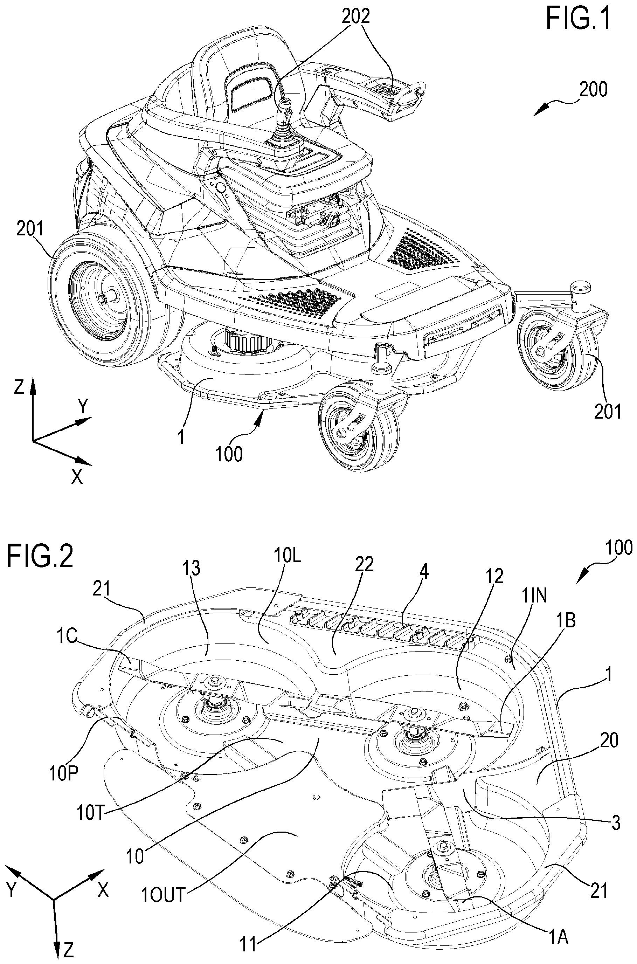

In the embodiment illustrated in figures 1-4, the cutting plate 100 comprises three blades 1A, 1B, 1C rotatably housed in three corresponding cutting chambers 11, 12, 13. Specifically, the cutting plate 100 comprises said first blade 1A rotatably housed in said first cutting chamber 11, said second blade 1B rotatably housed in said second cutting chamber 12 and said third blade 1C rotatably housed in said third cutting chamber 13. The following description refers to the particular embodiment illustrated, which however is to be understood only in an exemplary and absolutely non-limiting sense as cutting plates with a different number of blades and/or cutting chambers are to be considered included in the scope of the description.

Preferably, at least one blade 1A, 1B, 1C comprises a metal profile having cutting edges extending in the length direction of the profile, a pair of collection flaps arranged at the ends of the profile and a pair of shredding flaps arranged adjacent to the collection flaps. In particular, said shredding flaps are bent in the reverse direction with respect to said collection flaps.

Still preferably, said first blade, said second blade 1B and said third blade 1C are identical to each other in shape and/or size.

The body 1 also defines an unloading channel 1OUT. Said unloading channel 1OUT is in communication with said at least one cutting chamber 11, 12, 13. In the illustrated embodiment, said unloading channel 1OUT is in communication with said first cutting chamber 11, said second cutting chamber 12 and said third cutting chamber 13. Said unloading channel 1OUT is defined in a rear region of said body 1 and is configured to allow an expulsion of the residues deriving from the cutting operations of said at least one blade 1A, 1B, 1C.

As shown in figure 2, said cutting cavity 10 is open towards the ground so that said blades 1A, 1B, 1C can act on the material present to execute the corresponding cutting operations.

Note that said cutting chambers 11, 12, 13 extend into said at least one cutting plate 100 seamlessly and said cutting cavity 10 is defined by the cutting chambers 11, 12, 13 themselves. In other words, said cutting cavity 10 is defined by the union of the first cutting chamber 11, of the second cutting chamber 12 and of the third cutting chamber 13, which are in continuity with each other.

In a preferred embodiment, said at least one blade 1A, 1B, 1C is a blade configured for a treatment of a soil surface, preferably for cutting grass present on said soil surface.

In one embodiment, said at least one blade 1A, 1B, 1C has a length comprised between 350 mm and 500 mm, preferably comprised between 400 mm and 500 mm, even more preferably equal to 435 mm. In the embodiment shown, said blades 1A, 1B, 1C are equal in number to said cutting chambers 11, 12, 13. Specifically, each cutting chamber 11, 12, 13 is configured to accommodate a respective blade 1A, 1B, 1C. In other words, in such an embodiment, the cutting plate 100 includes a blade for each cutting chamber.

Said cutting chamber 10 has a concave shape. Specifically, the concavity of said cutting chamber 10 faces said soil so that said at least one blade 1A, 1B, 1C can act on the surface of said soil and cut any grass present.

Said cutting cavity 10 is at least partially defined by at least one side wall 10L, preferably parallel to a vertical axis Z, and a top wall 10T, preferably perpendicular to said vertical axis Z. Said at least one side wall 10L and said top wall 10T are continuously connected to define at least partially said cutting cavity 10, which is open towards the ground to be treated. In this sense, the cutting cavity 10 comprises an access section open towards said ground; in particular, said access section is in an opposite position with respect to said top wall 10T.

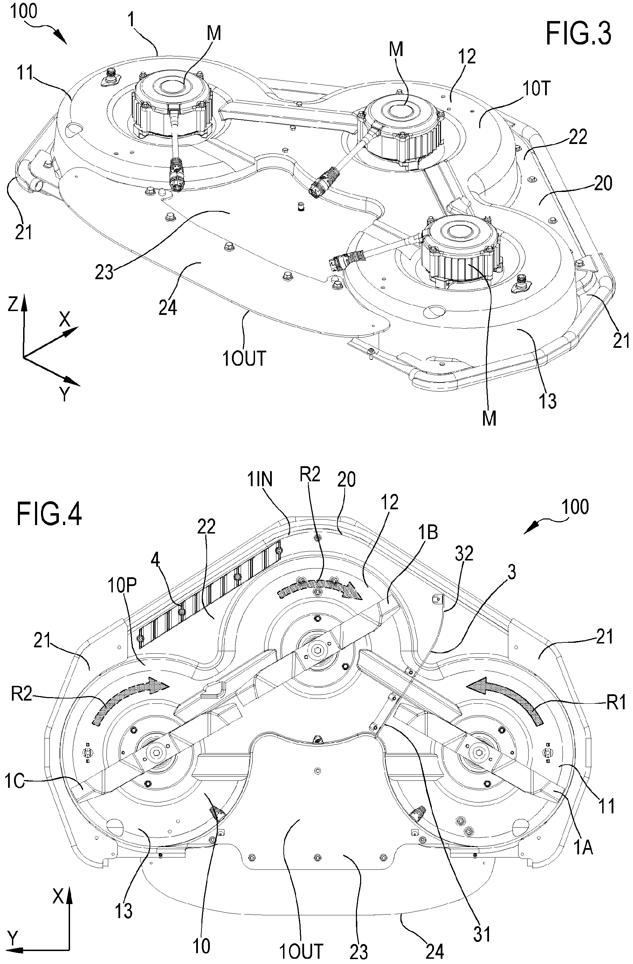

As shown in figure 4, the side wall 10L at least partially defines a perimeter 10P of said cutting cavity 10. In particular, said side wall 10L is shaped so as to define at least partially said at least one cutting chamber 11, 12, 13.

In the illustrated embodiment, said perimeter 10P is an open perimeter, i.e. a perimeter that partially delimits said first cutting chamber 11, said second cutting chamber 12 and said third cutting chamber 13. In other embodiments not illustrated, said perimeter 10P is a closed perimeter, which externally delimits and defines the cutting cavity 10.

Preferably, as shown in the accompanying figures, each cutting chamber 11, 12, 13 has a cap shape with a substantially circular section. Specifically, the side wall 10L of the cutting cavity 10 defines, locally for each cutting chamber, at least partially a circumference. The circumference defined by said side wall 10L for each cutting chamber has a diameter that is greater than the length of the respective blade 1A, 1B, 1C, preferably greater than 1-5 mm.

Outside the perimeter 10P of said cutting cavity 10, said cutting plate 100 comprises an edge surface 20. Said edge surface 20 externally surrounds said cutting cavity 10 and defines the outer portion of the cutting plate 100.

Preferably, said edge surface 20 comprises a first portion 21 and a second portion 22. As shown in figures 1-4, said first portion 21 is arranged in a side (right and/or left) region of the body 1 and said second portion 22 is arranged in a front (or frontal) region of the body 1. In this document, the terms "front", "frontal", "rear", "back" and similar terms are to be considered as referring to a position along a longitudinal axis X of the cutting plate 100. Similarly, the terms "side", "central", "right", "left" and similar terms are to be considered as referring to a position along a transverse axis Y of the cutting plate 100, where the longitudinal axis X and the transverse axis Y are orthogonal to each other.

In the illustrated embodiment, said first portion 21 occupies both side (right and left) regions of the cutting plate 100 and laterally delimits the second portion 22.

As shown in figure 2, said first portion 21 and said second portion 22 of said edge surface 20 lie, in use, on planes respectively arranged at a first height and at a second height with respect to the ground. In accordance with what is shown, said second height is greater than said first height so as to define, below said second portion 22 of said edge surface 20, an inlet chamber 1IN in communication with said cutting cavity 10. In other words, said first portion 21 and said second portion 22 lie, in use, on distinct parallel planes, preferably perpendicular to said vertical axis Z. Advantageously, the plane of said second portion 22 is located at a greater level than the plane of the first portion 21 so as to facilitate the entry of grass into said cutting cavity 10 through said inlet chamber 1IN. Still advantageously, said first portion 21 is located at a level closer to the ground so as to offer a greater shielding adapted to avoid the expulsion of solid bodies at high speed from the cutting cavity 10 under the action of the at least one blade 1A, 1B, 1C.

Preferably, the difference between said first height and said second height, measured along said vertical axis Z, is comprised between 25 mm and 28 mm.

Preferably, said edge surface 20 comprises a third portion 23. Said third portion 23 is positioned at a rear region of said body 1 and at least partially defines said unloading channel 1OUT. As shown in figure 2, said third portion 23 lies, in use, on a plane respectively arranged at a third height with respect to the ground so as to define at least partially said unloading channel 1OUT, which is in communication with said cutting cavity 10. In accordance with what is depicted, said third height is greater than said first height, preferably greater than said second height. Advantageously, said third portion 23 guarantees said unloading channel 1OUT an amplitude such as to facilitate the expulsion of the residues of the cutting operations by said at least one blade 1A, 1B, 1C.

In the illustrated embodiment, said second portion 22 and said third portion 23 are substantially aligned along said longitudinal axis X, while the parts of second portion 12 are substantially aligned along a transverse axis Y. In this configuration, said first portion 21 and said third portion 23 are both laterally limited by said second portion 12. In other words, said first portion 21 and said third portion 23 are not adjoining each other and are divided by said cutting cavity 10 and by said second portion 22.

As shown in figure 2 and figure 4, said unloading channel 1OUT at least partially interrupts said side wall 10L and defines an opening in said perimeter 10P to allow communication between the cutting cavity 10 and an external environment and, preferably, to allow the expulsion of residues of a soil treatment due to the rotation of said at least one blade 1A, 1B, 1C. Preferably, said residues are grass fragments cut by the rotation of said at least one blade 1A, 1B, 1C.

Preferably, the defined opening of said unloading channel 1OUT can be selectively blocked so as to allow executing, by means of said at least one blade 1A, 1B, 1C, a grass cutting operation in mulching mode.

As shown in the accompanying figures, the extension, measured along said transverse axis Y, of the opening defined by said unloading channel 1OUT at said perimeter 10P of said cutting plate 100 is comprised between 80% and 90% of the distance, measured along said transverse axis Y, between the centres of gravity of said first cutting chamber 11 and said third cutting chamber 13.

As shown in figures 2-4, the body 1 of the cutting plate 100 comprises a covering element 24, installed at said third portion 23 of the edge surface 20. Specifically, said covering element 24 is configured to prevent a collision between the mobile device 200 and any solid bodies expelled at high speed from said cutting cavity 10 due to the rotation of said at least one blade and in transit through said unloading channel 1OUT.

As shown in figures 2-4, said covering element 24 is preferably installed by means of fixing elements, such as for example screws, bolts, hinges, joints or other known fixing elements. Still preferably, said covering element 24 is made of metal material.

In one embodiment, said cutting plate 100 comprises a cap, not shown in the accompanying figures. Said cap can be associated with said body 1 and is configured to be removably received at said unloading channel 1OUT. Preferably, said cap has substantially the same shape as said opening defined at the unloading channel 1OUT and, when applied, determines a closure of said perimeter 10P. Depending on the embodiments, said cap is made of a metal material and/or a plastic material and/or a metal alloy. Still preferably, said cap is configured to be installed to said body 1, at said unloading channel 1OUT, by means of fixing elements, such as for example screws, bolts, hinges, joints or other known fixing elements.

As shown in figure 3, said cutting plate 100 comprises at least one drive motor M (hereinafter simply referred to as motor M) operatively connected to said at least one blade 1A, 1B, 1C and configured to determine a rotation of said at least one blade 1A, 1B, 1C.

Preferably, said at least one motor M is connected to said at least one blade 1A, 1B, 1C by means of a transmission system and/or by means of a direct connection. In one embodiment, said at least one motor M comprises a drive shaft rotatable about a substantially vertical working axis, in particular parallel to said vertical axis Z.

In a preferred embodiment, said at least one motor M comprises an electric motor that can be powered via the home network through an electric cable or through a rechargeable battery which is connected for power supply to said at least one drive motor. In an alternative embodiment, said at least one motor M comprises an internal combustion engine.

Preferably, said at least one motor M is integral with said body 1. In particular, a movement along said vertical axis Z of said cutting plate 100 causes a substantially identical movement of the at least one motor M along said vertical axis Z.

As shown in the embodiment of the accompanying figures, said cutting plate 100 preferably comprises a motor M for each of said blades 1A, 1B, 1C. In this case, said cutting plate 100 comprises three motors M, one for each of the three blades 1A, 1B, 1C. As shown in figure 3, said at least one motor M is associated with a cutting chamber 11, 12, 13, in particular at the top wall 10t of the cutting cavity 10. Therefore, the top wall 10T is interposed between, i.e. separates, a motor M and the cutting chamber 11, 12, 13 housing the relative blade 1A, 1B, 1C.

Each motor M is operatively connected to a specific blade 1A, 1B, 1C for determining a rotation thereof about a rotation axis. In one embodiment, each motor M is configured to move the relative blade 1A, 1B, 1C at a rotation speed not higher than 3500 rpm. Preferably, the rotation axis of each blade 1A, 1B, 1C is parallel or coincident with the working axis of the drive shaft of the respective motor M and, therefore, the rotation of said drive shaft determines the rotation of the corresponding blade 1A, 1B, 1C.

Preferably, said motors M determine the rotation of at least one of said blades 1A, 1B, 1C in a first direction R1 around said rotation axis and the rotation of at least one other of said blades 1A, 1B, 1C in a second direction R2 around said rotation axis. In particular, said second direction R2 is opposite to said first direction R1. In other words, the motors M determine the rotation of a portion of blades in said first direction R1 and the rotation of the remaining portion of blades in said second direction R2, i.e. in the opposite direction to said first direction R1.

As already established, in the illustrated embodiment, said cutting plate 100 comprises three cutting chambers, namely the first cutting chamber 11, the second cutting chamber 12 and the third cutting chamber 13. As shown in figures 2 and 4, said second cutting chamber 12 is interposed between the first cutting chamber 11 and the third cutting chamber 13 along said transverse axis Y, i.e. the second cutting chamber 12 occupies a central position.

Preferably, the first cutting chamber 11 and the third cutting chamber 13 are aligned along said transverse axis Y, i.e. the central points or centres of gravity of the first cutting chamber 11 and of the third cutting chamber 13 assume a substantially identical position along said longitudinal axis X.

Still preferably, said second cutting chamber 12 is not aligned with said first cutting chamber 11 and said third cutting chamber 13 along said transverse axis Y, i.e. the central point or centre of gravity of the second cutting chamber 12 assumes a different position along said longitudinal axis X with respect to the central points or centre of gravity of the first cutting chamber 11 and of the third cutting chamber 13.

As shown in figure 4, a motor M is configured to determine the rotation of the first blade 1A in said first direction R1 and the remaining motors M are configured to determine the rotation of the second blade 1B and the third blade 1C in said second direction R2. In the embodiment illustrated, with reference to the perspective of figure 4, the first blade 1A is rotated in said first direction R1 (counterclockwise), while the remaining blades, i.e. the second blade 1B and the third blade 1C, are rotated in said second direction R2 (clockwise).

Preferably, the cutting plate 100 comprises at least one deflector and/or separator element 3. Said at least one deflector and/or separator element 3 is fixed to said body 1 or integrated in said body 1. In particular, said at least one deflector and/or separator element 3 is at least partially installed in said cutting cavity 10 so as to be interposed between said first cutting chamber 11 and said second cutting chamber 12.

Said at least one deflector and/or separator element 3 is configured to prevent, in whole or in part, a first air flow generated, in use, in said first cutting chamber 11, in particular by means of the rotation of the first blade 1A, from accessing said second cutting chamber 12 and to prevent, in whole or in part, a second air flow generated, in use, in said second cutting chamber 12, in particular by means of the rotation of the second blade 1B, from accessing said first cutting chamber 11.

In particular, said at least one deflector and/or separator element 3 is configured to interrupt the continuity between said first cutting chamber 11 and said second cutting chamber 12, actually interrupting the continuity therebetween. Consequently, said at least one deflector and/or separator element 3 is configured to divide said cutting cavity 10 into two sub-cavities, each defined laterally by the deflector and/or separator element 3 and by the side wall 10L. The union of said sub-chambers coincides with said cutting cavity 10.

In light of the above, said at least one deflector and/or separator element 3 is configured to separate, at least partially, the flows of residues of a soil treatment generated by said first blade 1A and said second blade 1B. More in detail, at least one deflector and/or separator element 3 is configured to carry out at least one function between:
- conveying said first air flow and said second air flow towards said unloading channel 1OUT;
- improving an unloading of said residues through said unloading channel 1OUT in particular in the direction of a collection bag associated with said mobile device 200;
- improving a cutting efficiency of said first blade 1A and/or said second blade 1B;
- minimizing the risk of expulsion of solid bodies at high speed from said cutting cavity 10 due to the rotation of said first blade 1A and/or said second blade 1B;

Depending on the embodiment, said deflector and/or separator element 3 is made of metal material and/or metal alloy and/or plastic material.

Depending on the embodiment, said deflector and/or separator element 3 has a thickness comprised between 0.5 mm and 10 mm, preferably between 1 mm and 5 mm, more preferably substantially equal to 3 mm.

Preferably, said deflector and/or separator element 3 is connected to said body 1 by means of fixing elements, such as for example screws, bolts, hinges, joints or other known fixing elements.

In one aspect, said at least one deflector and/or separator element 3 comprises a dividing portion 31, positioned at said cutting cavity 10, and a protection portion 32, positioned at said edge portion 20. Preferably, said protection portion 32 is positioned at said second portion 22.

On the one hand, said dividing portion 31 is configured to separate said first cutting chamber 11 and said second cutting chamber 12 so as to prevent or attenuate an interference between said first air flow and said second air flow. On the other hand, the protection portion 32 is configured to intercept, in use, any solid bodies expelled at high speed from said cutting cavity 10 due to the rotation of said at least one first blade 1A and a second blade 1B. In particular, the protection portion 32 is configured to intercept, in use, any solid bodies expelled from said first cutting chamber 11 due to the rotation of said first blade 1A and/or from said second cutting chamber 12 due to the rotation of said second blade 1B.

Preferably, said dividing portion 31 has a substantially flat shape and said protection portion 32 has a substantially curved shape adapted to increase the structural strength of the deflector and/or separator element 3.

In the embodiment illustrated in figures 2-4, the cutting plate 100 comprises a single deflector and/or separator element 3. This deflector and/or separator element 3 is interposed between the first cutting chamber 11, housing the first blade 1A rotating in said first direction R1, and the second cutting chamber 12, housing the second blade 1B rotating in said second direction R2. Preferably, said deflector and/or separator element 3 is interposed between two cutting chambers housing blades rotating in opposite direction. Therefore, said deflector and/or separator element 3 is configured to separate, at least partially, the flows of residues of a soil treatment generated by two blades housed in two contiguous cutting chambers and rotating in opposite directions.

In an embodiment not illustrated, said cutting plate 100 comprises two or more deflector and/or separator elements 3. In the illustrated embodiment, the cutting plate 100 may comprise a further deflector and/or separator element, interposed between said second cutting chamber 12 and said third cutting chamber 13. Similarly to the deflector and/or separator element previously described, said further deflector and/or separator element is configured to prevent, in whole or in part, said second air flow generated, in use, in said second cutting chamber 12, in particular by means of the rotation of said second blade 1B, from accessing said third cutting chamber 13 and to prevent, in whole or in part, a third air flow generated, in use, in said third cutting chamber 13, in particular by means of a rotation of said third blade 1C, from accessing said second cutting chamber 12.

In particular, said further deflector and/or separator element is configured to convey said second air flow and said third air flow towards said unloading channel 1OUT.

Said body 1 defines a centre plane, extending along said longitudinal axis X and along said vertical axis Y and which divides said body 1 into a first half-body and a second half-body. By way of example, said first half-body may be a right half-body and said second half-body may be a left half-body.

Preferably, said deflector and/or separator element 3 is applied to said first half-body and said further deflector and/or separator element is applied to said second half-body. In other words, if two deflector and/or separator elements are applied to the same body, they are preferably applied to two different half-bodies.

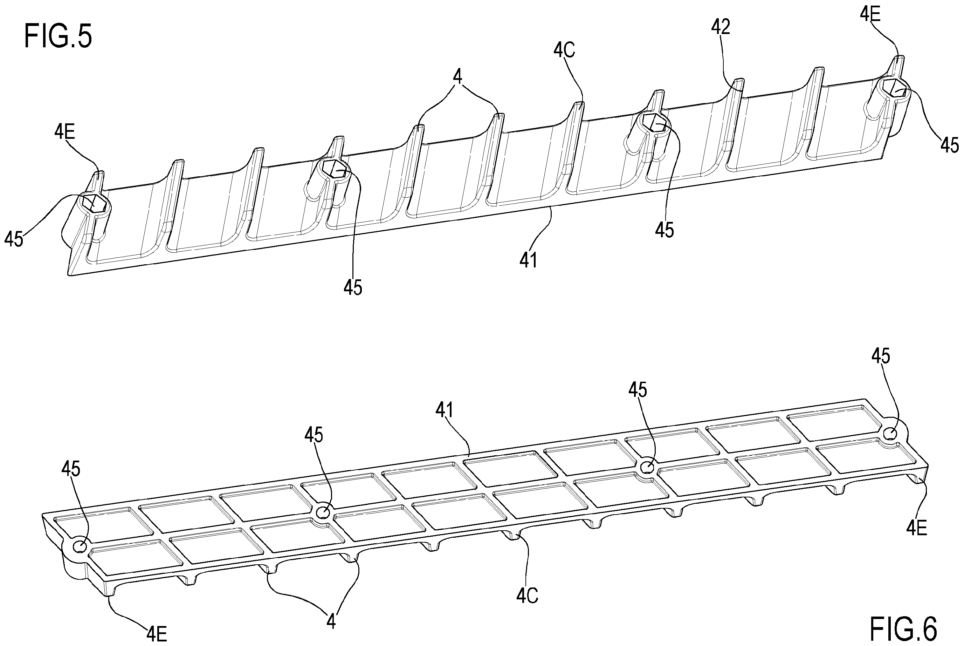

Preferably, as shown in the accompanying figures, said at least one cutting plate 100 comprises at least a plurality of protection elements 4. Said plurality of protection elements 4 is illustrated in detail in figures 5-8.

Said plurality of protection elements 4 is fixed to said body 1 or integrated in said body 1 and comprises protection elements 4 which are distinct from each other and optionally parallel to each other. Specifically, said protection elements 4 extend from said second portion 22 of said edge surface 20. In the embodiment illustrated in figures 2-4, said deflector and/or separator element 3 is applied to said first half-body and the protection elements of said plurality of protection elements 4 are applied to said second half-body, i.e. said plurality of protection elements 4 is applied to a different half-body with respect to the one in which the deflector and/or separator element 3 is installed.

In a first embodiment, illustrated by way of example in figures 5-8, said protection elements 4 extend orthogonally to said second portion 22, i.e. parallel to said vertical axis Z.

In a second embodiment, not illustrated, said protection elements 4 extend from said second portion 22 forming an angle other than 90° with said vertical axis. Said angle is preferably comprised between 15° and 80°, more preferably comprised between 30° and 60°. By way of example, said angle may be equal to 45°.

Specifically, said plurality of protection elements 4 has respective apexes 42 arranged, in use, at a distance with respect to the ground which is less than said second height, preferably at a distance substantially corresponding to said first height.

Said protection elements 4 are configured to intercept, in use, any solid bodies expelled at high speed from at least one of said cutting chambers 11, 12, 13 due to the rotation of at least one blade of said blades 1A, 1B, 1C. In this way, the plurality of protection elements 4 prevents said solid bodies from escaping from said inlet chamber 1IN. In other words, the plurality of protection elements 4 prevents the expulsion of solid bodies thrown at high speed by the rotation of the blades 1A, 1B, 1C towards said inlet chamber 1IN, i.e. before the cutting plate 100, with a direction substantially parallel to the ground.

As shown in figures 5-8, said protection elements 4 define therebetween a plurality of channels for the passage of grass present on a surface of said ground through said inlet chamber 1IN.

Preferably, said plurality of protection elements 4 is made of at least one of the following materials: plastic material, metal material, metal alloy.

Preferably, said plurality of protection elements 4 is connected to the body 1 of said cutting plate 100 by means of fixing elements, such as, for example, screws, bolts, hinges, joints or other known fixing elements.

Depending on the embodiments, said plurality of protection elements 4 comprises a number of protection elements comprised between 3 and 50, preferably comprised between 5 and 20, more preferably comprised between 7 and 13. In the illustrated embodiment, the plurality of protection elements 4 comprises eleven protection elements.

In the illustrated embodiment, said protection elements 4 are substantially equidistant, in particular they are spatially spaced at a substantially equal distance. In other words, considering a first protection element, a second protection element and a third protection element consecutive to each other, the distance placed separating between the first protection element and the second protection element is substantially equal to the distance placed separating between the second protection element and the third protection element.

In other alternative embodiments not illustrated, said protection elements 4 are spatially spaced at different distances. By way of example, at least one protection element of said plurality of protection elements that has distances different from the adjacent protection elements.

Preferably, the protection elements of said plurality of protection elements 4 are substantially aligned with each other. In other words, there is a common plane intersecting all the protection elements of said plurality of protection elements 4. As shown in figure 2, said common plane forms with said transverse axis Y an angle comprised between 10° and 60°, preferably comprised between 15° and 45°, more preferably comprised between 20° and 40°, even more preferably comprised between 30° and 35°. In the illustrated embodiment, said common plane forms with said transverse axis Y an angle equal to 32°.

In the embodiment shown in the accompanying figures, said plurality of protection elements 4 extends in said common plane over a length comprised between 250 mm and 400 mm, preferably comprised between 300 mm and 350 mm, even more preferably equal to 320 mm.

In accordance with what is illustrated, said cutting plate 100 preferably comprises a base 41 connecting said protection elements of said plurality of protection elements 4 to each other.

Said base 41 is applied, in particular screwed, to said edge surface 20, preferably at said second portion 22 of the edge surface 20. Therefore, said base 41 is configured to connect said plurality of protection elements 4 to the body 1 of said cutting plate 100.

Preferably, said plurality of protection elements 4 and said base 41 are made in a single piece. More preferably, said base 41 and the protection elements of said plurality of protection elements 4 form a single body in plastic material.

In the illustrated embodiment, said base 41 has a substantially planar extension and the protection elements of said plurality of protection elements 4 extend away with respect to said base up to said apex 42, preferably in a direction perpendicular to said base 41.

Depending on the embodiments, the extension of said base 41 is comprised between 160 mm and 480 mm, preferably comprised between 280 mm and 360 mm, more preferably of about 320 mm. Preferably, each protection element 4 has a symmetrical geometry with respect to a plane of symmetry substantially parallel to said vertical axis Z.

In the illustrated embodiment, each protection element has a substantially linear shape and, consequently, said plurality of protection elements 4 constitutes a linear comb. In other embodiments not illustrated, said plurality of protection elements 4 may have articulated shapes, comprising one or more angled and/or curved segments. By way of example, said protection elements may assume the form of lightning bolts, with a plurality of segments angled between them in succession.

Depending on the embodiment, said apex 42 is shaped in accordance with one of the following forms:
- a substantially round shape (embodiment illustrated);
- a substantially flat shape;
- a substantially pointed shape;
- a substantially square shape.

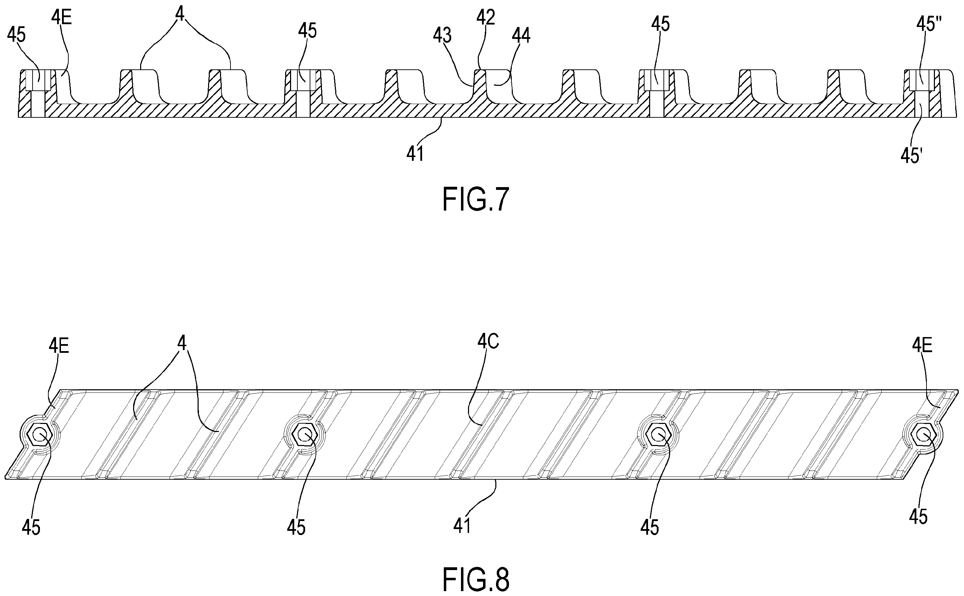

As shown in figure 7, each protection element 4 comprises a pair of side walls 43, 44 extending between said base 41 and said apex 42. In other words, said pair of side walls 43, 44 join said apex 42 to said base 41.

In a first embodiment, a distance between the side walls 43, 44 is substantially constant along their extension between said base 41 and said apex 42, i.e. the side walls are substantially parallel to each other.

In a second embodiment, the distance between the side walls 43, 44 is decreasing along their extension from said base 41 to said apex 42. In this embodiment, said distance assumes a maximum value in proximity of said base 41.

In a third embodiment, the distance between the side walls 43, 44 is increasing along their extension from said base 41 to said apex 42. In this embodiment, said distance assumes maximum value in proximity of said apex 42.

Preferably, at least one protection element of said plurality of protection elements 4 comprises a through hole 45, which extends in the respective protection element along an extension direction, which, in use, is preferably parallel to said vertical axis Z and therefore preferably perpendicular to said base 41.

Preferably, said through hole 45 is substantially symmetrical to said extension direction.

Said through hole 45 is configured to receive a fixing element configured to stably connect said protection element 4 to said body 1 of the cutting plate 100. Preferably, said fixing element comprises a screw.

In the illustrated embodiment, said through hole 45 comprises at least a first section 45' and a second section 45". Specifically, said first section 45' is closer to said base 41 with respect to said second section 45" and preferably has a smaller diameter than a diameter of said second section 45".

In another embodiment not illustrated, said through hole 45 has a substantially constant diameter in said extension direction.

In one embodiment, said through hole 45 has a substantially smooth inner wall.

In an alternative embodiment, said through hole 45 has a threading on at least a part of the respective inner wall. Advantageously, said threading is configured to engage said fixing element, which also has a threaded portion adapted to cooperate with said threading.

In the illustrated embodiment, said plurality of protection elements 4 comprises two end protection elements 4E and at least one central protection element 4C. In particular, said end protection elements 4E define therebetween a space comprising said at least one central protection element 4C.

Said end protection elements 4E may have the same shape as the at least central protection element 4C or they may have a different shape with respect to said at least central protection element 4C.

In the embodiment, said end protection elements 4E have said through hole 45.

Preferably, as shown in the embodiment of figures 5-8, at least one central protection element 4C has said through hole 45.

Preferably, as in the illustrated embodiment, said plurality of protection elements 4 is positioned in said second region 22 of the edge surface 20 at least before said second cutting chamber 12 and said third cutting chamber 12, i.e. the cutting chambers between which the deflector and/or separator element 3 is not present and which house the blades 1B, 1C rotating in the same direction (second direction R2). It should be noted that one or more constructive parameters of said plurality of protection elements 4, such as for example the number of the protection elements and/or the extension of each of the protection elements in a direction parallel to said transverse axis Y and/or the inclination of each of the protection elements with respect to said transverse axis Y and/or the shape of the section obtained by intersecting each of the protection elements with a plane substantially parallel to the ground, are defined so as to allow the protection elements of said plurality of protection elements 4 to act, as a whole, as a continuous shield for any solid bodies expelled from said at least one cutting chamber 11, 12, 13 in the direction of said inlet chamber 1IN.

In an embodiment not illustrated, said cutting plate 100 comprises a further plurality of protection elements, also positioned in said second region 22. Specifically, said further plurality of protection elements is positioned before said first cutting chamber 11 and said second cutting chamber 12. Preferably, said cutting plate 100 comprises a further base connecting the protection elements of said further plurality of protection elements to each other, said further base being distinct and separate from the base 41 connecting the protection elements of said plurality of protection elements 4 to each other. The present document also relates to a mobile device 200 suitable for executing maintenance operations of a land, in particular grass cutting operations. In the illustrated embodiment, said mobile device 200 is a ride-on type lawnmower.

In accordance with what has been illustrated, said mobile device 200 comprises at least:
- a support frame;
- the previously described cutting plate 100, associated with said support frame, preferably movably by means of a system for varying the height of said cutting plate 100 with respect to the ground;
- a movement arrangement 201 of the mobile device 200 configured to implement an advancement of said mobile device 200 on said ground;
- control means 202 operatively connected to said cutting plate 100 and/or said movement arrangement in order to allow a user of said mobile device 200 to actuate at least one among an activation, an adjustment and a deactivation of said cutting plate 100 and/or said movement arrangement 201.

Depending on the embodiment, said movement arrangement 201 comprises a plurality of wheels of which at least one wheel is a driving wheel and/or one or more tracks.

Preferably, said control means 202 comprise at least one among a button, a pedal, a lever, a joystick and a screen, preferably a touchscreen.

In one embodiment, said mobile device 200 is electrically powered and comprises a plurality of on-board batteries. Preferably, said batteries are of the rechargeable and removable type.

In an embodiment, said mobile device 200 further comprises a collection bag configured to allow an accumulation, for the purpose of subsequent disposal, of said residues, in particular of cut grass fragments. In particular, said collection bag is in communication with said unloading channel 1OUT of said cutting plate 100 and/or with the opening defined by said unloading channel 1OUT at said perimeter 10P of said cutting plate 100.

### ADVANTAGES OF THE INVENTION

The present invention achieves important advantages.

As is clear from what has been illustrated above, the structural and/or functional characteristics of the cutting plate 100 subject-matter of the present description allow to overcome the limits of the prior art. Firstly, the cutting plate 100 allows a more homogeneous treatment of the turfgrass of the soil treated by the mobile device in which it is installed.

The presence of the deflector and/or separator element 3 allows to minimize, or even cancel, the interference between the flows generated by the rotating blades inside the cutting chamber. In particular, the residues of grass material generated by the rotation of a rotating blade in one of the cutting chambers do not invade the other chambers of the cutting chambers, generating accumulations of material that cause a degradation of performance known in the solutions known in the art.

When said cutting plate is used with the open unloading channel 1OUT, the presence of the deflector and/or separator element 3 allows to channel and direct the residues of mowed grass material towards said unloading channel so as to favour a smoother outflow of the cutting cavity.

When the cutting plate is used in mulching mode, i.e. with the unloading channel 1OUT plugged, the presence of the deflector and/or separator element 3 allows the residues of material to be kept longer inside the respective cutting chamber so that the rotating blade can provide for greater shredding before deposition by gravity.

The lack of interference between the flows generated by the different blades provided in the cutting plate also allows a more homogeneous distribution of the load between the motors in charge of the rotation of the blades themselves. In particular, overloads and current absorption peaks on one or more of the present motors are avoided. This aspect generates important advantages for battery-powered mobile devices as autonomy is considerably increased and, consequently, also the soil surface that can be treated with a single charge.

In addition, the presence of the protection elements guarantees greater protection against the expulsion of solid bodies at high speed due to the rotation of the blades. Such protection elements minimize the possibility that a solid body can be expelled from the cutting plate frontally, exposing people and/or property in proximity of the mobile device in which the cutting plate is installed to risk. Finally, it should be noted that the configuration of the protection elements according to the invention to intercept, during use of the cutting plate, any solid bodies expelled at high speed from one or more of the cutting chambers of the cutting plate clearly distinguishes the invention from any elements that may have similar geometric and/or structural characteristics, but which are clearly differently configured, for example to prepare the grass for cutting immediately before coming into contact with the blades.

None of the cutting plates known to the state of the art (in particular none among the cutting plates disclosed by documents US2005/0126152A1, WO2015/055724A1, DE202020005799U1, US2022/0394918A1) exhibit protection elements configured to intercept, in use, solid bodies expelled at high speed from the cutting chambers and therefore the present invention, compared to such known cutting plates, is highly advantageous, in that, thanks to the invention, the risk that the use of the cutting plate may cause damage to property and/or people in proximity of the cutting plate is significantly reduced.

## Claims

1. Cutting plate (100) configured to be associated with a mobile device (200), said cutting plate (100) comprising:
- a body (1) defining a cutting cavity (10), said cutting cavity (10) being, in use, open towards the ground and comprising at least a first cutting chamber (11) and a second cutting chamber (12), said first cutting chamber (11) and said second cutting chamber (12) being in communication with each other,
- at least a first blade (1A) and a second blade (1B), said first blade (1A) and said second blade (1B) being rotatably housed, respectively, in said first cutting chamber (11) and in said second cutting chamber (12), and
- at least one deflector and/or separator element (3) fixed to said body (1) or integrated in said body (1), said at least one deflector and/or separator element (3) being at least partially installed in said cutting cavity (10) so as to be interposed between said first cutting chamber (11) and said second cutting chamber (12),
wherein said at least one deflector and/or separator element (3) is configured to prevent, in whole or in part, a first air flow generated, in use, in said first cutting chamber (11) from accessing said second cutting chamber (12) and to prevent, in whole or in part, a second air flow generated, in use, in said second cutting chamber (12) from accessing said first cutting chamber (11),
wherein said cutting cavity (10) is at least partially defined by at least one side wall (1 0L) and by a top wall (10T), continuously connected to said at least one side wall (10L),
wherein said at least one side wall (10L) at least partially defines a perimeter (10P) of said cutting cavity (10),
wherein, outside said perimeter (1 0P), said body (1) comprises an edge surface (20),
**characterised in that** said at least one deflector and/or separator element (3) comprises a dividing portion (31), positioned at said cutting cavity (10), and a protection portion (32), positioned at said edge surface (20).

2. Cutting plate (100) according to Claim 1, said mobile device (200) being suitable for executing maintenance operations on a land, in particular grass cutting operations, wherein said first air flow is generated by means of a rotation of said first blade (1A) and said second air flow is generated by means of a rotation of said second blade (1B) and wherein said at least one side wall (10L) is parallel to a vertical axis (Z) and said top wall (10T) is perpendicular to said vertical axis (Z).

3. Cutting plate (100) according to Claim 1 or to Claim 2, wherein said edge surface (20) comprises at least a first portion (21) and a second portion (22), said second portion (22) being positioned at a front region of said body (1), and wherein said protection portion (32) is positioned at said second portion (22).

4. Cutting plate (100) according to Claim 3, wherein said first portion (21) and said second portion (22) of said edge surface (20) lie, in use, on planes respectively arranged at a first height and at a second height with respect to the ground, where said second height is greater than said first height, so as to define, below said second portion (22) of said edge surface (20), an inlet chamber (1IN) in communication with said cutting cavity (10);
and/or wherein said first portion (21) is arranged in a side region of said body (1);
and/or wherein said first portion (21) laterally delimits said second portion (22).

5. Cutting plate (100) according to any one of the previous Claims, wherein said dividing portion (31) is configured to separate said first cutting chamber (11) and said second cutting chamber (12) so as to prevent or attenuate an interference between said first air flow and said second air flow;
and/or wherein said protection portion (32) is configured to intercept, in use, any solid bodies expelled at high speed from said cutting cavity (10), in particular from said first cutting chamber (11) due to the rotation of said first blade (1A) and/or from said second cutting chamber (12) due to the rotation of said second blade (1B);
and/or wherein said dividing portion (31) has a substantially flat shape and said protection portion (32) has a substantially curved shape adapted to increase the structural strength of said deflector and/or separator element (3).

6. Cutting plate (100) configured to be associated with a mobile device (200), said mobile device (200) being preferably suitable for executing maintenance operations on a land, in particular grass cutting operations, said cutting plate (100) comprising:
- a body (1) defining a cutting cavity (10), said cutting cavity (10) being, in use, open towards the ground and comprising at least a first cutting chamber (11) and a second cutting chamber (12), said first cutting chamber (11) and said second cutting chamber (12) being in communication with each other, and
- at least a first blade (1A) and a second blade (1B), said first blade (1A) and said second blade (1B) being rotatably housed, respectively, in said first cutting chamber (11) and in said second cutting chamber (12),
**characterised by** further comprising at least one deflector and/or separator element (3) fixed to said body (1) or integrated in said body (1), said at least one deflector and/or separator element (3) being at least partially installed in said cutting cavity (10) so as to be interposed between said first cutting chamber (11) and said second cutting chamber (12),
wherein said at least one deflector and/or separator element (3) is configured to prevent, in whole or in part, a first air flow generated, in use, in said first cutting chamber (11), in particular by means of a rotation of said first blade (1A), from accessing said second cutting chamber (12) and to prevent, in whole or in part, a second air flow generated, in use, in said second cutting chamber (12), in particular by means of a rotation of said second blade (1B), from accessing said first cutting chamber (11).

7. Cutting plate (100) according to any one of the previous Claims, wherein said at least a first cutting chamber (11) and a second cutting chamber (12) extend into said cutting cavity (10) seamlessly, said cutting cavity (10) being defined, in whole or in part, by said first cutting chamber (11) and by said second cutting chamber (12);
and/or wherein said at least one deflector and/or separator element (3) is configured to interrupt the continuity between said first cutting chamber (11) and said second cutting chamber (12);
and/or wherein said at least one deflector and/or separator element (3) is configured to interrupt, at least partially, a fluid communication between said first cutting chamber (11) and said second cutting chamber (12);
and/or wherein said at least one deflector and/or separator element (3) is configured to separate, at least partially, the flows of residues of a soil treatment generated by said at least first blade (1A) and second blade (1B), said residues being in particular grass cut fragments;
and/or wherein said at least one deflector and/or separator element (3) is configured to carry out at least one function between:
- conveying said first airflow and said second air flow towards an unloading channel (1OUT) defined by said body (1) and in communication with said first cutting chamber (11) and with said second cutting chamber (12);
- improving an unloading of said residues through said unloading channel (1OUT), in particular in the direction of a collecting bag associated to said mobile device (200);
- improving a cutting efficiency of said first blade (1A) and/or of said second blade (1B);
- minimizing the risk of expulsion of solid bodies at high speed from said cutting cavity (10) due to the rotation of said first blade (1A) and/or of said second blade (1B); and
and/or wherein said deflector and/or separator element (3) is made of metal material and/or of metal alloy and/or of plastic material;
and/or wherein said deflector and/or separator element (3) has a thickness comprised between 0,5 mm and 10 mm, preferably between 1 mm and 10 mm, more preferably of about 3 mm;
and/or wherein said deflector and/or separator element (3) is connected to said cutting plate (100) by means of fixing means, such as screws or bolts or hinges or joints;
and/or wherein said cutting cavity (10) has a concave shape;
and/or wherein said cutting cavity (10) is at least partially defined by at least one side wall (10L), preferably parallel to a vertical axis (V), and by a top wall (10T), continuously connected to said at least one side wall (10L) and preferably perpendicular to said vertical axis (V);
and/or wherein said cutting cavity (10) comprises an access section open towards said ground, said access section being in an opposite position with respect to said top wall (10T);
and/or wherein said at least one side wall (10L) is shaped so as to define at least partially said first cutting chamber (11) and said second cutting chamber (12);
and/or wherein said at least one side wall (10L) at least partially defines a perimeter (10P) of said cutting cavity (10);
and/or wherein, outside said perimeter (10P), said body (1) comprises an edge surface (20);
and/or wherein said edge surface (20) comprises at least a first portion (21) and a second portion (22), said second portion (22) being positioned at a front region of said body (1);
and/or wherein said first portion (21) and said second portion (22) of said edge surface (20) lie, in use, on planes respectively arranged at a first height and at a second height with respect to the ground, where said second height is greater than said first height, so as to define, below said second portion (22) of said edge surface (20), an inlet chamber (1N) in communication with said cutting cavity (10); and/or wherein said first portion (21) is arranged in a side region of said body (1);
and/or wherein said first portion (21) laterally delimits said second portion (22);
and/or wherein said edge surface (20) comprises a third portion (23), said third portion (23) being positioned at a rear region of said body (1);
and/or wherein said third portion (23) at least partially defines an unloading channel (1OUT), said unloading channel (1OUT) being in communication with said cutting cavity (10), in particular with said first cutting chamber (11) and with said second cutting chamber (12);
and/or wherein said third portion (23) of said edge surface (20) lies, in use, on a plane respectively arranged at a third height with respect to the ground so as to define at least partially, below said third portion (23) of said edge surface (20), said unloading channel (1OUT);
and/or wherein said third height is greater than said first height, said third height being preferably greater than said second height;
and/or wherein said at least one deflector and/or separator element (3) comprises a dividing portion (31), positioned at said cutting cavity (10), and a protection portion (32), positioned at said edge surface (20) and/or at said second portion (22);
and/or wherein said dividing portion (31) is configured to separate said first cutting chamber (11) and said second cutting chamber (12) so as to prevent or attenuate an interference between said first air flow and said second air flow;
and/or wherein said protection portion (32) is configured to intercept, in use, any solid bodies expelled at high speed from said cutting cavity (10), in particular from said first cutting chamber (11) due to the rotation of said first blade (1A) and/or from said second cutting chamber (12) due to the rotation of said second blade (1B);
and/or wherein said dividing portion (31) has a substantially flat shape and said protection portion (32) has a substantially curved shape adapted to increase the structural strength of said deflector and/or separator element (3);
and/or wherein said unloading channel (1OUT) at least partially interrupts said at least one side wall (10L) and defines an opening in said perimeter (1P) to allow communication between the cutting cavity (10) and an external environment and preferably to allow the expulsion, through said opening defined at said unloading channel (1OUT), of said residues, optionally wherein said opening defined at said unloading channel (1OUT) is configured to be selectively blocked so as to allow executing, by means of said first blade (1A) and/or by means of said second blade (1B), a grass cutting operation in mulching mode;
and/or wherein a covering element (24) is applied to said body (1), in particular at said third portion (23), said covering element (24) being configured to prevent a collision between the mobile device (200) and, in use, any solid bodies expelled at high speed from said cutting cavity (10) due to the rotation of said first blade (1A) and/or of said second blade (1B);
and/or wherein said cutting plate (100) further comprises a cap, associable with said body (1) and configured to be removably received at said unloading channel (1OUT);
and/or wherein said cap has substantially the same shape as said opening defined at said unloading channel (1OUT) and, when associated with said body (1), determines a closure of said perimeter (10P);
and/or wherein said cap is made of a metal material and/or of a plastic material and/or of a metal alloy; and/or wherein said cap is configured to be associated with said body (1), at said unloading channel (1OUT), by means of fixing elements;
and/or wherein at least one among said first blade (1A) and said second blade (1B) comprises a metal profile having cutting edges extending in the length direction of the profile, a pair of collection flaps arranged at the ends of the profile and a pair of shredding flaps arranged adjacent to said collection flaps, said shredding flaps being bent in the reverse direction with respect to said collection flaps; and/or wherein said first blade (1A) and said second blade (1B) are identical to each other in shape and/or in size;
and/or wherein said cutting plate (100) comprises at least one drive motor (M) operatively connected to at least said first blade (1A) and to said second blade (1B), said at least one drive motor (M) being configured to determine a rotation of said first blade (1A) and of said second blade (1B), said at least one drive motor (M) being an electric motor or an internal combustion engine, optionally wherein said cutting plate (100) comprises at least a first drive motor operatively connected to at least said first blade (1A) and a second drive motor operatively connected to said second blade (1B), said first drive motor being distinct and separate from said second drive motor;
and/or wherein said at least one drive motor (M) is configured to operate at a speed less than or equal to 3300 rpm, preferably less than or equal to 3200 rpm, in particular wherein said first drive motor and second drive motor are both configured to operate at a speed less than or equal to 3300 rpm, preferably less than or equal to 3200 rpm;
and/or wherein said at least one drive motor (M) is configured to determine a rotation of one among said at least first blade (1A) and second blade (1B) in a first rotation direction (R1) and a rotation of the other of said at least first blade (1A) and second blade (1B) in a second rotation direction (R2), said second rotation direction (R2) being opposite said first rotation direction (R1);
and/or wherein said first blade (1A) and said second blade (1B) are configured to rotate, in use, in respective rotation directions which are opposite each other;
and/or wherein said deflector and/or separator element (3) is interposed between two cutting chambers housing blades rotating in opposite direction;
and/or wherein said cutting cavity (10) comprises said first cutting chamber (11), said second cutting chamber (12) and a third cutting chamber (13), said second cutting chamber (12) being interposed between said first cutting chamber (11) and said third cutting chamber (13), in particular along a transverse axis (Y) of said cutting plate (100);
and/or wherein said cutting plate (100) comprises a third blade (1C), rotatably housed in said third cutting chamber (13);
and/or wherein said at least one drive motor (M) is configured to determine the rotation of said first blade (1A) in said first rotation direction (R1) and to determine the rotation of said second blade (1B) and of said third blade (1C) in said second rotation direction (R2), said second rotation direction (R2) and said first rotation direction (R1) being opposite each other;
and/or wherein said cutting plate (100) comprises a further deflector and/or separator element, said further deflector and/or separator element being at least partially installed in said cutting cavity (10) so as to be interposed between said second cutting chamber (12) and said third cutting chamber (13); and/or wherein said further deflector and/or separator element is configured to:
- prevent, in whole or in part, said second air flow generated, in use, in said second cutting chamber (12), in particular due to the rotation of said second blade (1B), from accessing said third cutting chamber (13) and prevent, in whole or in part, a third air flow generated, in use, in said third cutting chamber (13), in particular due to a rotation of said third blade (1C), from accessing said second cutting chamber (12); and/or
- conveying said second air flow and said third air flow towards said unloading channel (1OUT);
and/or wherein said cutting plate (100) further comprises a plurality of protection elements (4), the protection elements of said plurality of protection elements (4) being fixed to said body (1) or integrated in said body (1), the protection elements of said plurality of protection elements (4) being distinct from each other and optionally parallel to each other, the protection elements of said plurality of protection elements (4) extending, optionally extending perpendicularly, from said second portion (22) of said edge surface (20) so as to have respective apexes (42) arranged, in use, at a distance with respect to the ground which is less than said second height, preferably at a distance with respect to the ground which substantially corresponds to said first height, wherein the protection elements of said plurality of protection elements (4) are configured to intercept, in use, any solid bodies expelled at high speed from said cutting cavity (10), in particular any solid bodies expelled at high speed from said third cutting chamber (13) in particular due to the rotation of said third blade (1c);
and/or wherein said body (1) defines a centre plane, said centre plane extending in particular along said longitudinal axis (X) and along said vertical axis (Z) and dividing said body (1) into a first half-body and a second half-body, optionally wherein said first half-body is a right half-body and said second half-body is a left half-body;
and/or wherein said at least one deflector (3) and/or separator element is applied to said first half-body;
and/or wherein said further deflector and/or separator element is applied to said second half-body; and/or wherein the protection elements of said plurality of protection elements (4) are applied to said second half-body.

8. Cutting plate (100) configured to be associated with a mobile device (200), said mobile device (200) being preferably suitable for executing maintenance operations, in particular grass cutting operations, said cutting plate (100) comprising:
- a body (1) defining a cutting cavity (10), said cutting cavity (10) being, in use, open towards the ground and comprising at least one cutting chamber (11, 12, 13), said cutting cavity (10) being at least partially delimited externally by an edge surface (20) of said body (1), said edge surface (20) comprising at least a first portion (21) and a second portion (22), said second portion (22) being positioned at a front region of said body (1), said first portion (21) and said second portion (22) of said edge surface (20) lying, in use, on planes respectively arranged at a first height and at a second height with respect to the ground, where said second height is greater than said first height so as to define, below said second portion (22) of said edge surface (20), an inlet chamber (1IN) in communication with said cutting cavity (10), and
- at least one blade (1A, 1B, 1C) rotatably housed in said at least one cutting chamber (11, 12, 13), **characterised by** further comprising a plurality of protection elements (4), the protection elements of said plurality of protection elements (4) being fixed to said body (1) or integrated in said body (1), the protection elements of said plurality of protection elements (4) being distinct from each other and optionally parallel to each other, the protection elements of said plurality of protection elements (4) extending from said second portion (22) of said edge surface (20) so as to have respective apexes (42) arranged, in use, at a distance with respect to the ground which is less than said second height, preferably at a distance with respect to the ground which substantially corresponds to said first height, wherein the protection elements of said plurality of protection elements (4) are configured to intercept, in use, any solid bodies expelled at high speed from said at least one cutting chamber (11, 12, 13), in particular due to the rotation of said at least one blade (1A, 1B, 1C).

9. Cutting plate (100) according to Claim 8, wherein the protection elements of said plurality of protection elements (4) define therebetween a plurality of channels to allow a passage of grass through said inlet chamber (1IN);
and/or wherein said plurality of protection elements (4) comprises a number of protection elements comprised between 3 and 50, preferably comprised between 5 and 20, more preferably comprised between 7 and 13;
and/or wherein the protection elements of said plurality of protection elements (4) are substantially equidistant, i.e., considering a first protection element, a second protection element and a third protection element consecutive to each other, the distance between the first protection element and the second protection element is substantially equal to the distance between the second protection element and the third protection element.

10. Cutting plate (100) according to Claim 8 or to Claim 9, wherein the protection elements of said plurality of protection elements (4) are aligned with each other;
and/or wherein there is a common plane intersecting all the protection elements of said plurality of protection elements (4);
and/or wherein said common plane forms with a transverse axis (Y) of said cutting plate (100) an angle comprised between 10° and 60°, preferably comprised between 15° and 45°, more preferably comprised between 20° and 40°;
and/or wherein the difference between said first height and said second height, measured along a vertical axis (Z), is comprised between 25 mm and 28 mm.

11. Cutting plate (100) according to any one of Claims 8 to 10, further comprising a base (41) connecting the protection elements of said plurality of protection elements (4) to each other;
and/or wherein said base (41) is applied to, in particular screwed to, said edge surface (20), in particular to said second portion (22) of said edge surface (20);
and/or wherein said base (41) is configured to connect said plurality of protection elements (4) to said body (1);
and/or wherein said base (41) has a substantially planar extension;
and/or wherein the protection elements of said plurality of protection elements (4) extend away from said base (41) until reaching said respective apexes (42), preferably along a direction perpendicular to said base (41);
and/or wherein the protection elements of said plurality of protection elements (4) are made in a single piece with said base (41), preferably wherein said base (41) and the protection elements of said plurality of protection elements (4) form a single body made of plastic material;
and/or wherein the extension of said base (41) is comprised between 160 mm and 480 mm, preferably comprised between 280 mm and 360 mm, more preferably about 320 mm.

12. Cutting plate (100) according to any one of Claims 8 to 11, wherein each protection element of said plurality of protection elements (4) has a substantially symmetrical geometry with respect to a plane of symmetry parallel to said vertical axis (Z);
and/or wherein each protection element of said plurality of protection elements (4) comprises at least one pair of side walls (43, 44) extending between said base (41) and an apex (42), said at least one pair of side walls (43, 44) joining said apex (42) to said base (41);
and/or wherein said apex (42) is shaped in accordance with a substantially round shape or a substantially flat shape or a substantially pointed shape or a substantially square shape;
and/or wherein a through hole (45) is obtained in at least one protection element of said plurality of protection elements (4);
and/or wherein said through hole (45) extends in said at least one protection element in an extension direction, said extension direction being, in use, substantially parallel to said vertical axis (Z);
and/or wherein said through hole (45) is substantially symmetrical to said extension direction; and/or wherein said through hole (45) is configured to receive a fixing element, in particular a screw, to stably connect said plurality of protection elements (4) to said body (1);
and/or wherein said through hole (45) comprises at least a first section (45') and a second section (45"), said first section (45') being closer to said base (41) than said second section (45"), said first section (45') having a diameter smaller than a diameter of said second section (45");
and/or wherein said plurality of protection elements (4) comprises two end protection elements (4E) and at least one central protection element (4C), said end protection elements (4E) defining a space therebetween comprising said at least one central protection element (4C);
and/or wherein said end protection elements (4E) have said through hole (45); and
and/or wherein at least one central protection element (4C) has said through hole (45).

13. Cutting plate (100) according to any one of Claims 8 to 12, wherein said at least one blade (1A, 1B, 1C) comprises a metal profile having cutting edges extending in the length direction of the profile, a pair of collection flaps arranged at the ends of the profile and a pair of shredding flaps arranged adjacent to the collection flaps, said shredding flaps being bent in the reverse direction with respect to said collection flaps;
and/or wherein one or more constructive parameters of said plurality of protection elements (4), such as for example the number of the protection elements and/or the extension of each of the protection elements in a direction parallel to said transverse axis (Y) and/or the inclination of each of the protection elements with respect to said transverse axis (Y) and/or the shape of the section obtained by intersecting each of the protection elements with a plane substantially parallel to the ground, are defined so as to allow the protection elements of said plurality of protection elements (4) to act, as a whole, as a continuous shield for any solid bodies expelled from said at least one cutting chamber (11, 12, 13) in the direction of said inlet chamber (1IN);
and/or wherein said cutting cavity (10) has a concave shape;
and/or wherein said cutting cavity (10) is at least partially defined by at least one side wall (10L), preferably parallel to said vertical axis (Z), and by a top wall (10T), continuously connected to said at least one side wall (10L) and preferably perpendicular to said vertical axis (Z);
and/or wherein said cavity (10) comprises an access section open towards said ground, said access section being in an opposite position with respect to said top wall (10T);
and/or wherein said at least one side wall (10L) is shaped so as to define at least partially said at least one cutting chamber (11, 12, 13);
and/or wherein said at least one side wall (10L) at least partially defines a perimeter (10P) of said cutting cavity (10);
and/or wherein said edge surface (20) delimits said cutting cavity (10) outside said perimeter (10P); and/or wherein said edge surface (20) comprises a third portion (23), said third portion (23) being positioned at a rear region of said body (1);
and/or wherein said third portion (23) at least partially defines an unloading channel (1OUT), said unloading channel (1OUT) being in communication with said cutting cavity (10), in particular with said at least one cutting chamber (11, 12, 13);
and/or wherein said third portion (23) of said edge surface (20) lies, in use, on a plane arranged at a third height with respect to the ground so as to define at least partially, below said third portion (23) of said edge surface (20), said unloading channel (1OUT);
and/or wherein said third height is greater than said first height, preferably said third height being greater than said second height;
and/or wherein said unloading channel (1OUT) at least partially interrupts said at least one side wall (10L) and defines an opening in said perimeter (10P) to allow communication between the cutting cavity (10) and an external environment and, preferably, to allow the expulsion, through said opening defined at said unloading channel (1OUT), of residues of a soil treatment due to the rotation of said at least one blade (1A, 1B, 1C), said residues being in particular grass cut fragments, optionally wherein said opening defined at said unloading channel (1OUT) is configured to be selectively blocked so as to allow executing, by means of said at least one blade (1A, 1B, 1C), a grass cutting operation in mulching mode;
and/or wherein a covering element (24) configured to prevent a collision between the mobile device (200) and, in use, any solid bodies expelled at high speed from said cutting cavity (10), in particular due to the rotation of said at least one blade (1A, 1B, 1C), is applied to said body (1), optionally wherein said covering element (24) is applied at said third portion (23);
and/or wherein said cutting cavity (10) comprises a first cutting chamber (11), a second cutting chamber (12) and a third cutting chamber (13), said second cutting chamber (12) being interposed between said first cutting chamber (11) and said third cutting chamber (13), in particular along a transverse axis of said cutting plate (100);
and/or wherein said cutting plate (100) comprises a first blade (1A), a second blade (1B) and a third blade (1C) rotatably housed, respectively, in said first cutting chamber (11), in said second cutting chamber (12) and in said third cutting chamber (13);
and/or wherein said first cutting chamber (11) and said third cutting chamber (13) are aligned along said transverse axis (Y), i.e. the central points or centres of gravity of said first cutting chamber (11) and of said third cutting chamber (13) assume a substantially identical position along a longitudinal axis (X) of said cutting plate (100) perpendicular to said transverse axis (Y);
and/or wherein said second cutting chamber (12) is not aligned with said first cutting chamber (11) and with said third cutting chamber (13) along said transverse axis (Y), i.e. the central point or centre of gravity of said second cutting chamber (12) assumes a different position along said longitudinal axis (X) with respect to the centre points or centre of gravity of said first cutting chamber (11) and of said third cutting chamber (13);
and/or wherein the extension, measured along said transverse axis (Y), of the opening defined by said unloading channel (1OUT) at said perimeter (10P) of said cutting plate (100) is comprised between 80% and 90% of the distance, measured along said transverse axis (Y), between the central points or the centres of gravity of said first cutting chamber (11) and of said third cutting chamber (13);
and/or wherein said cutting plate (100) comprises at least one drive motor (M) operatively connected to said first blade (1A), to said second blade (1B) and to said third blade (1C) for determining a rotation thereof, said at least one drive motor (M) being an electric motor or an internal combustion engine; and/or wherein said at least one drive motor (M) is configured to operate at a speed less than or equal to 3300 rpm, preferably less than or equal to 3200 rpm;
and/or wherein at least one drive motor (M) is configured to determine the rotation of said first blade (1A) in a first rotation direction (R1) and to determine the rotation of said second blade (1B) and of said third blade (1C) in a second rotation direction (R2), said second rotation direction (R2) and said first rotation direction (R1) being opposite each other;
and/or wherein said plurality of protection elements (4) is positioned in said second region (22) at least before said second cutting chamber (12) and said third cutting chamber (13);
and/or wherein said cutting plate (100) comprises a further plurality of protection elements, said plurality of protection elements (4) and said further plurality of protection elements being positioned in said second region (22) before said second cutting chamber (12) and said third cutting chamber (13) and before said first cutting chamber (11) and said third cutting chamber (13), respectively;
and/or wherein said cutting plate (100) comprises a further base connecting the protection elements of said further plurality of protection elements to each other, said further base being distinct and separate from the base (41) connecting the protection elements of said further plurality of protection elements (4) to each other;
and/or wherein said cutting cavity (10) comprises a pair of further cutting chambers in communication with each other, a pair of blades being rotatably housed in said further cutting chambers, wherein said cutting plate (100) further comprises a deflector and/or separator element (3) fixed to said body (1) or integrated in said body (1), said at least one deflector and/or separator element (3) being at least partially installed in said cutting cavity (10) so as to be interposed between said first one (11) of said further chambers and a second one (12) of said further cutting chambers, and wherein said at least one deflector and/or separator element (3) is configured to prevent, in whole or in part, a first air flow generated, in use, in said first one (11) of said further cutting chambers from accessing said second one (12) of said further cutting chambers and to prevent, in whole or in part, a second air flow generated, in use, in said second one (12) of said further cutting chambers from accessing said first one (11) of said further cutting chambers;
and/or wherein said at least one deflector and/or separator element (3) comprises a dividing portion (31), positioned at said cutting cavity (10), and a protection portion (32), positioned at said edge surface (20) and/or at said second portion (22);
and/or wherein said dividing portion (31) is configured to separate said further cutting chambers from each other, so as to prevent or attenuate an interference between said first air flow and said second air flow;
and/or wherein said protection portion (32) is configured to intercept, in use, any solid bodies expelled at high speed from at least one of said further cutting chambers;
and/or wherein said dividing portion (31) has a substantially flat shape and said protection portion (32) has a substantially curved shape adapted to increase the structural strength of the deflector and/or separator element (3).

14. Mobile device (200), in particular mobile device configured to execute maintenance operations on a land, in particular grass cutting operations, comprising at least:
- a support frame;
- a cutting plate (100) according to at least one of the previous claims, said cutting plate (100) being associated to said support frame, preferably in a movable fashion by means of a system for varying the height of said cutting plate (100) with respect to the ground;
- a movement arrangement (201) configured to cause an advancement of said mobile device (200) on said ground;
- control means (202) operatively connected to said cutting plate (100) and/or to said movement arrangement (201) in order to allow a user of said mobile device (200) to actuate at least one among an activation, an adjustment and a deactivation of said cutting plate (100) and/or of said movement arrangement (201).

15. Mobile device (200) according to the previous claim, wherein said movement arrangement (201) comprises a plurality of wheels of which at least one wheel is a drive wheel and/or one or more tracks;
and/or wherein said control means (202) comprise at least one among a button, a pedal, a lever, a joystick and a screen, preferably a touchscreen;
and/or wherein said mobile device (200) is electrically powered and comprises a plurality of on-board batteries, said batteries being preferably of the rechargeable and removable type;
and/or wherein said mobile device (200) further comprises a collection bag configured to allow an accumulation, for the purpose of a subsequent disposal, of said residues, in particular of cut grass fragments, wherein said collection bag is in communication with said unloading channel (1OUT) of said cutting plate (100) and/or with the opening defined by said unloading channel (1OUT) at said perimeter (10P) of said cutting plate (100).
